# NEUE EUROPÄISCHE PATENTSCHRIFT

(11) **EP 1 516 802 B2**
(45) Veröffentlichungstag und Bekanntmachung des Hinweises auf die Entscheidung über den Einspruch: **10.04.2013**
(45) Hinweis auf die Patenterteilung: 31.12.2008
(21) Anmeldenummer: 04021407.4
(22) Anmeldetag: 09.09.2004
(51) Int. Cl.: B62D 23/00, B62D 31/02

(54) **Seitenwandsäule eines Omnibusses**
Side wall pillar of a bus
Colonne de paroi latéral d'un autobus

(30) Priorität: 17.09.2003 DE 10342842
(43) Veröffentlichungstag der Anmeldung: 23.03.2005
(73) Patentinhaber: MAN Nutzfahrzeuge Aktiengesellschaft, 80995 München (DE)
(72) Erfinder: Junginger, Jörg, 80796 München (DE); Riebeck, Lars, 85221 Dachau (DE); Schöttl, Christoph, 82061 Neuried (DE)

(56) Entgegenhaltungen:
- EP-A- 0 733 539
- EP-A- 0 952 067
- EP-A- 1 138 581
- WO-A-01/30638
- DE-A1- 19 644 047
- DE-A1- 19 829 832
- DE-A1- 19 903 722
- DE-A1- 19 903 724

## Beschreibung

### Technisches Gebiet

Die Erfindung betrifft eine Seitenwandsäule eines Omnibusses, die an gegenüberliegenden Enden mit jeweils einem Rahmenelement verbindbar ist und die ein geschlossenes, sich zwischen den beiden Enden erstreckendes Hohlprofilelement aufweist.

### Stand der Technik

Karosseriegerippe, die aus einer Vielzahl von Seitenwandsäulen sowie Längs-, Quer-, Boden- und Dachträgern aufgebaut sind, sind im Fahrzeugbau hinlänglich bekannt und kommen vor allem im Omnibusbau vielfach zum Einsatz. Ein wesentliches Bauteil eines Karosseriegerippes stellt die Seitenwandsäule dar, die sowohl zum Tragen der Dach- und Bodenelemente als auch zur Befestigung von Fenstern sowie Blechbeplankungen vorgesehen ist. Damit die Blechbeplankungen im oberen Teil eines Omnisbusses und die Oberfläche der Kofferaumklappen eine ebene Fläche bilden, wird die Seitenwandsäule geteilt ausgeführt. Während der obere Teil der Seitenwandsäule im Karosserigerippe die Verbindung zwischen den Dachträgern und dem Längsprofil darstellt, verläuft der untere Teil der Seitenwandsäule leicht nach hinten versetzt vom Längsprofil aus zu den Bodenträgern. Darüber hinaus ist im Bereich des aus oberer und unterer Seitenwandsäule sowie des Längsprofils gebildeten Knotenpunkts üblicherweise eine Konsole vorgesehen, die als Auflage für den Fußboden dient.

Die Einheit aus Seitenwandsäulen, Dach- sowie Boden- bzw. Fußbodenelemente tragenden Querträgern bilden einen sogenannten Ringspant, der während der Fahrt Schwingungsbelastungen und Biegebeanspruchungen, insbesondere bei einem Unfall, ausgesetzt sein kann. Um trotz immer leichter werdender Bauweisen im Fahrzeugbau die Sicherheitsanforderungen zu erfüllen, werden bei Karosseriegerippen, bspw. auch an dem Knotenpunkt Seitenwandsäule/Längsprofil/Fußbodenauflage spezielle Einbauten vorgesehen, die die Seitenwand lokal verstärken oder in Form von Winkelelementen zwischen angrenzende Träger angebracht werden.

Eine derartige Knotenverstärkung für Gerippestrukturen von Nutzfahrzeugen ist bspw. aus der DE 199 29 219 A1 bekannt. Bei der in dieser Druckschrift vorgeschlagenen Lösung werden an den Öffnungen eines Gerippes, bspw. für eine Tür oder ein Fenster, Verstärkungen an den Seitenwänden der senkrecht zueinander verlaufenden Rahmenträger angeschweißt. Durch diese zusätzliche Verbindung angrenzender Rahmenträger wird die Steifigkeit der Gerippestruktur verstärkt. Die Befestigung erfolgt hierbei durch Anpunkten oder Anschweißen. Nachteilig an dem beschriebenen System ist, dass eine erhebliche Anzahl von Knotenverstärkungen benötigt wird und darüber hinaus die Herstellung der benötigten Schweißverbindungen sehr zeitaufwendig ist.

Aus der DE 199 03 722 A1 ist eine Wagenkastenseitenwand für Omnibusse bekannt, die über Seitenwandsäulen verfügt. Die beschriebenen Seitenwandsäulen verfügen hierbei insbesondere über Biegungen in unterschiedlichen Bereichen der Säule. Aus dem Artikel "Weiterentwicklung der Umsturzsicherheit bei MAN-Reiseomnibussen" aus ATZ Automobiltechnische Zeitschrift Band 98 (1996), Heft 12 ist eine Seitenwandsäule eines Omnibusses bekannt, die zur Umsturzsicherheit von Omnibussen beiträgt.

Neben den vorbeschriebenen Problemen stellt sich im Fahrzeugbau häufig das Problem, dass der für eine Verstärkung benötigte Platz nicht zur Verfügung steht, da die Verstärkung bspw. in den Fußraum des Fahrgastbereiches hineinragt und somit den Fahrgast beeinträchtigen würde.

Ausgehend von dem bekannten Stand der Technik liegt der Erfindung daher die Aufgabe zu Grunde, eine Tragsäule für ein Karosseriegerippe eines Kraftfahrzeugs anzugeben, die die Sicherheitsanforderungen, insbesondere in Bezug auf den innerhalb der Fahrgastzelle erforderlichen Überlebensraum erfüllt, und gleichzeitig kostengünstig und mit verhältnismäßig geringem fertigungstechnischen Aufwand herzustellen ist. Darüber hinaus soll die Tragsäule möglichst platzsparend ausgeführt sein, damit der einer Nutzung zur Verfügung stehende Raum nicht eingeschränkt wird.

Die der Erfindung zu Grunde liegende Aufgabe wird mit einer Seitenwand säule gemäß Patentanspruch 1 gelöst. Vorteilhafte Weiterbildungen des Erfindungsgedankens sind Gegenstand der Unteransprüche sowie aus dem nachfolgenden Beschreibungstext und den Ausführungsbeispielen zu entnehmen.

Die Erfindung betrifft eine Seitenwandsäule eines Omnibusses, die an gegenüberliegenden Enden mit jeweils wenigstens einem Karosserieelement verbindbar ist und die ein sich zwischen den beiden Enden ersteckendes Hohlprofilelement aufweist, das einstückig ausgeführt ist und eine Längsmittenachse aufweist, die gekrümmt ist oder zumindest zwei nicht parallele Abschnitte aufweist, wobei sich an die gegenüberliegenden Enden äußere Säulenabschnitte anschließen, zwischen denen ein mittlerer Säulenabschnitt vorgesehen ist, und die sich dadurch auszeichnet, dass die Längsmittenachse im Bereich des mittleren Säulenabschnitts, der die beiden äußeren Säulenabschnitte verbindet, gekrümmt ist oder zumindest zwei nicht parallele Abschnitte aufweist und der mittlere Säulenabschnitt in wenigstens einer Beanspruchungsrichtung über ein größeres Widerstandsmoment gegen Biegung als die äußeren Säulenabschnitte verfügt wobei im Bereich des mittleren Säulenabschnittes wenigstens ein Verstärkungselement vorgesehen ist, das zumindest abschnittsweise einen Kontaktbereich mit dem Hohlprofilelement aufweist und das innerhalb des Hohlprofilelements angeordnet ist. Das Hochprofilelement weist im Bereich des mittleren Säulenabschnitts einen S-Schlag oder zwei Knicke auf.

Um das Widerstandsmoment der Tragsäule im mittleren Säulenabschnitt zu erhöhen, wird der wirksame Querschnitt der Säule in diesem Bereich vergrößert und/oder die Werkstoffeigenschaften entsprechend verbessert. Dies geschieht wahlweise durch das Vorsehen eines zusätzlichen Verstärkungselementes, den abschnittsweisen Einsatz eines Werkstoffes höherer Güte und/oder die Auswahl einer gegenüber den äußeren Säulensbschnitten größeren Wandstärke des Hohlprofilelementes im mittleren Säulenabschnitt. Neben dem Einsatz eines Werkstoffes höherer Güte im mittleren Säulensbschnitt ist es selbstverständlich auch denkbar, den für das Hohlprofilelement in diesem Bereich vorgesehenen Werkstoff derart zu vergüten, dass dieser über verbesserte Werkstoffeigenschaften verfügt.

Mit der Erfindung wird damit zum einen eine Tragsäule für ein Karosseriegerippe eines Kraftfahrzeugs realisiert, die auf Grund der speziellen Form in Bereichen einsetzbar ist, in denen die Platzverhältnisse beengt sind. Zum anderen wird durch die einstückige Ausführung des Hohlprofilelementes und die Verstärkung der Tragsäule im mittleren Säulenbereich eine einfache Herstellung und Montage bzw. Befestigung der Säule in einem Karosseriegerippe sicher gestellt, ohne dass hierbei Einbußen bezüglich der Festigkeit und Steifigkeit hingenommen werden müssen. Darüber hinaus wird mit der erfindungsgemäßen Tragsäule ein Trägerelement zur Verfügung gestellt, das auch an Verbindungsknoten, bspw. an einem Längsträger eines Omnibus Karosseriegerippes nicht geteilt werden muss, sondern auf Grund seiner Form einstückig an dem Träger vorbeiführbar ist. Somit ermöglicht die erfindungsgemäße Lösung den flexiblen Einsatz hochfester Tragsäulen an verschiedenen Stellen eines Karosseriegerippes auch unter Berücksichtigung spezieller konstruktiver Anforderungen.

Das sich zwischen den Enden der Tragsäule in Längsrichtung erstreckende Hohlprofilelement ist einstückig ausgeführt. Dies bedeutet, dass es sich bei dem Hohlprofilelement entweder um ein Bauteil handelt oder dass das Hohlprofilelement noch vor Einbau in ein Karosseriegerippe aus mehreren Bauelementen, bspw. durch Schweißen, zu einem einstückigen Bauteil zusammengefügt worden ist. Von Bedeutung hierbei ist lediglich, dass die Tragsäule im Moment des Einbaus in ein Karosseriegerippe als ein Bauteil zur Verfügung steht, damit die entsprechende Säule einfach in das Gerippe einsetzbar und mit den entsprechenden Karosserielementen verbindbar ist. Die Tragsäule ist an gegenüberliegenden Enden mit Karosserieelementen, wie etwa einem Boden- sowie einem Dachträger zu verbinden. Dies schließt allerdings nicht aus, dass die Tragsäule mit weiteren Karosserielementen verbunden wird. So ist es etwa denkbar, dass im mittleren Säulenbereich Konsolen als Halterungen eines Zwischenbodens befestigt werden oder dass zumindest abschnittsweise eine Beplankung an der Tragsäule angebracht wird.

In einer speziellen Ausführungsform ist die Tragsäule gedanklich in drei Abschnitte unterteilbar, von denen die äußeren Säulenabschnitte vorzugsweise jeweils zumindest teilweise in parallel zu einander angeordneten Ebenen liegen. Der mittlere Säulenabschnitt ist bei einer solchen Säule derart geformt, dass dieser Abschnitt das Verbindungselement zwischen den beiden äußeren Säulenabschnitten darstellt. Hierzu verfügt der mittlere Säulenabschnitt über zwei Enden, die jeweils mit den äußeren Säulenabschnitten verbunden sind und somit zumindest eine Ebene berühren, in der die äußeren Säulenabschnitte, bzw. zumindest die dem mittleren Säulenabschnitt zugewandten Endbereiche der äußeren Säulenabschnitte, angeordnet sind.

Das Hohlprofilelement der erfindungsgemäßen Tragsäule verfügt vorzugsweise über einen wenigstens nahezu rechteckigen, insbesondere 60 x 40 mm² großen Querschnitt. Es ist aber auch denkbar, dass der Querschnitt eine andere mehreckige oder sogar runde Kontur aufweist. Eine weitere besondere Ausführungsform sieht ein Hohlprofilelement mit einem quadratischen Querschnitt mit bevorzugten Abmessungen von 40 x 40, 50 x 50 oder 80 x 80 mm² vor.

Als Hohlprofilelement kommen insbesondere Bauelemente in Frage, die über eine Wandstärke von mindestens 2 mm verfügen. Als Werkstoff ist die Verwendung eines hochfesten Stahls mit einer Mindesttreckgrenze von 420 N/mm², vorzugsweise von

S 460, besonders geeignet. Es ist allerdings auch denkbar andere Werkstoffe, die die vorgenannte Anforderung bzgl. der Mindestsreckgrenze erfüllen und wie stahlartige Werkstoffe zu verarbeiten sind, für das Hohlprofilelement einzusetzen.

In einer weiteren besonderen Ausführungsform der erfindungsgemäßen Tragsäule verfügt das Hohlprofilelement im Bereich des mittleren Säulenabschnittes wenigstens teilweise über eine größere Wandstärke als im Bereich der äußeren Säulenabschnitte. Die Wandstärke des Hohlprofils wird in diesem Fall derart verstärkt, das der mittlere Säulenabschnitt der erfindungsgemäßen Tragsäule in zumindest einer möglichen Beanspruchungsrichtung ein größeres Widerstandmoment gegen Biegung als die äußeren Säulenabschnitte aufweist. Neben einer Erhöhung der Wandstärke ist es ferner möglich, im mittleren Säulenabschnitt wenigstens ein zusätzliches Verstärkungselement vorzusehen, das außerhalb, etwa als Manschette, oder innerhalb des Hohlprofils derart angeordnet wird, dass wenigstens abschnittsweise eine Kontaktfläche zwischen Hohlprofil und Verstärkungselement gebildet wird. Hierbei ist es sogar denkbar, das Verstärkungselement mehrfach geschachtelt, also indem mehrere Hohlprofile über- bzw. ineinander gesteckt werden, auszuführen. In jedem Fall ist sicher zu stellen, dass das Hohlprofil und das wenigstens eine Verstärkungselement im Bereich der Kontaktfläche eine innige Verbindung eingehen. Zur Herstellung einer solchen Verbindung sind annähernd alle bekannten Verbindungstechniken geeignet. So können hierfür sowohl Fertigungsverfahren wie Löten, Kleben, Schweißen oder Nieten eingesetzt werden, die zur Herstellung der Verbindung einen Hilfsstoff benötigen, als auch Verfahren wie Biegen, Pressen oder Ein- bzw. Aufschrumpfen, mit denen eine formschlüssige Verbindung zwischen dem Hohlprofil- und dem Verstärkungselement erzeugt wird. In einer ganz besonders geeigneten Ausführungsform der erfindungsgemäßen Tragsäule wird das Verstärkungselement mit Hilfe von Lochschweißungen mit dem Hohlprofilelement verbunden.

Alternativ zu der vorbeschriebenen Variante, das Widerstandsmoment gegen Biegung im mittleren Säulenabschnitt im Vergleich zu den äußeren Säulenabschnitten wenigstens teilweise zu erhöhen, ist es selbstverständlich auch denkbar, im mittleren Säulenabschnitt ein Verstärkungselement vorzusehen und ein Hohlprofil mit annähernd konstanter Wandstärke zu wählen. Für die Verbindung des Hohlprofilelementes mit dem Verstärkungselement sind auch bei dieser speziellen Ausführungsform die bereits beschriebenen Verbindungstechniken einsetzbar.

Eine weitere, ganz besonders geignete Ausführungsform der erfindungsgemäßen Tragsäule zeichnet sich dadurch aus, dass das Verstärkungselement im mittleren Säulenabschnitt innerhalb des Hohlprofilelementes angeordnet ist und hohlprofilartig, insbesondere mit einem rechteckigen bzw. sogar quadratischen Querschnitt, ausgebildet ist. Selbstverständlich ist es überdies möglich, einen anderen, mehreckigen oder auch runden Querschnitt für das hohlprofilartige Verstärkungselement zu wählen. Darüber hinaus sieht eine alternative Ausführungsform der erfindungsgemäßen Tragsäule vor, das Verstärkungselement in Form eines T-, Doppel-T-, I-, U- oder L-Profils auszubilden. Auch das Verstärkungselement weist vorzugsweise zumindest teilweise einen hochfesten Stahl mit einer Mindeststreckgrenze von 420 N/mm², insbesondere S 460, auf. In diesem Zusammenhang ist es besonders geeignet, für die gesamte Tragsäule, also insbesondere für das Hohlprofil- und für das Verstärkungselement den gleichen Werkstoff zu wählen.

In einer weiteren besonders geeigneten Ausführungsform der erfindungsgemäßen Tragsäule wird eine überaus exakte Anpassung des Widerstandsmoments gegen Biegung durch die Anordnung einer Mehrzahl bzw. eine Kombination verschiedener Elemente der bereits beschriebenen Verstärkungselemente in einer Tragsäule erreicht.

Die vorliegende Tragsäule für ein Karosseriegerippe eines Kraftfahrzeugs wird nachfolgend an Hand von Ausführungsbeispielen ohne Beschränkung des allgemeinen Erfindungsgedankens beschrieben. Hierbei zeigen:
- Fig. 1: Tragsäule mit Verstärkungselement
- Fig. 2: einstückige Tragsäule mit verstärktem Mittelbereich
- Fig. 3: Tragsäule aus dem Stand der Technik
- Fig. 4: Ringspant eines Karosseriegerippes im Belastungsfall

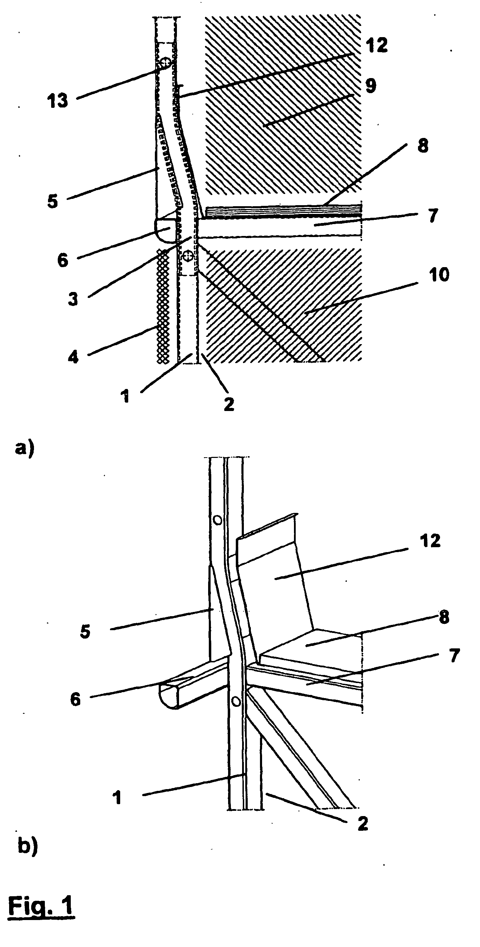

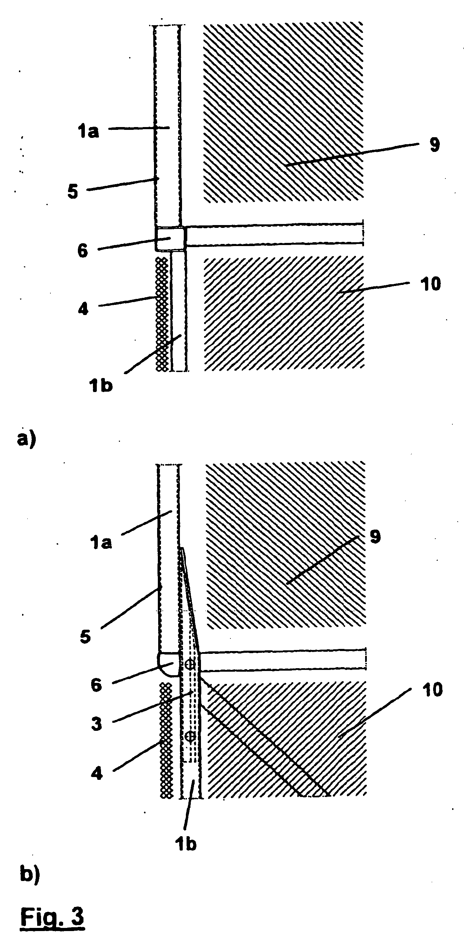

In den Figuren 1 a) und 2 a) sind Seitenansichten bzw. in den Figuren 1 b) und 2 b) dreidimensionale Darstellungen einer erfindungsgemäß ausgeführten Tragsäule zu sehen, die sich von der in Figur 3 dargestellten und aus dem Stand der Technik bekannten Tragsäule insbesondere dadurch unterscheiden, dass sie trotz eines S-Schlages innerhalb der Tragsäule ein durchgängiges Hohlprofil aufweisen, das in diesem Fall von einem Boden- bis zu einem Dachträger reicht. Gleiche Bauteilkomponenten sind in den Figuren mit gleichen Bezugszeichen versehen.

In Figur 1 ist ein Teil eines Omnibus-Karosseriegerippes dargestellt, in dem eine erfindungsgemäß ausgeführte Tragsäule 1 vorgesehen ist, die die Funktion einer Seitenwandsäule übernimmt. Die Seitenwandsäule 1 stellt als äußere Begrenzung eines Omnibus-Karosseriegerippes ein für die Statik der Karosserie wesentliches Bauelement dar, da an einem Ende ein Dachträger und am gegenüberliegenden Ende ein Bodenträger befestigt sind (nicht dargestellt). Außerdem werden im Bereich des Fahrgastbereiches 9 Blechbeplankungen 5 sowie Scheiben (nicht dargestellt) mit Hilfe entsprechender Befestigungselemente angebracht. Im Gegensatz zu der in Figur 3 dargestellten, geteilten Seitenwandsäule 1 ist die in Figur 1 dargestellte Seitenwandsäule einstückig ausgeführt und weist im mittleren Bereich einen Rücksprung in Form eines S-Schlages auf. Durch den innerhalb der Seitenwandsäule 1 vorgesehenen Rücksprung ist es möglich, die Seitenwandsäule einstückig auszuführen und gleichzeitig sicher zu stellen, dass die Blechbeplankung 5 und die Oberfläche der den Kofferraum 10 begrenzenden Kofferraumklappe 4 eine ebene Außenfläche bilden.

Um neben den fertigungstechnischen Vorteilen bei der Verwendung einer einstückigen Tragsäule als Seitenwandsäule 1, auch die Sicherheit eines Omnibus-Karosseriegerippes gewährleisten zu können, ist im mittleren Bereich der Seitenwandsäule 1, ein Verstärkungselement 3 vorgesehen. Das Verstärkungselement 3 ist hohlprofilartig ausgeführt, innerhalb des Hohlprofilelements 2 angeordnet und ist im oberen sowie im unteren Bereich über jeweils zwei Lochschweißverbindungen 13 mit dem Hohlprofilelement 2 verbunden.

Ferner ist an der Außenseite im mittleren Bereich der Seitenwandsäule 1 ein Längsträger 6 befestigt, der die Steifigkeit eines Omnibusberippes in Längsrichtung sicher stellt. Auf der Innenseite der Seitenwandsäule ist in diesem Bereich ein Querträger 7 befestigt, der als Konsole für den Fußboden 8 des Fahrgastbereiches 9 dient. Um den Fahrgastbereich 9 darüber hinaus auch gegen das Karosseriegerippe abzugrenzen ist eine Innenverkleidung 12 vorgesehen, die ebenfalls an der Seitenwandsäule 1 befestigt ist und für einen sauberen Abschluß des Fahrgastbereiches 9 sorgt.

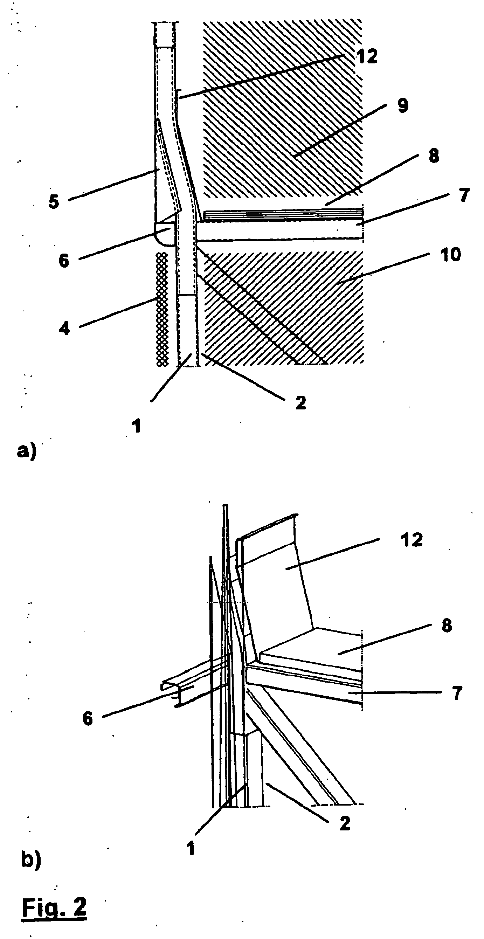

In Figur 2 ist der gleiche Ausschnitt eines Omnibus-Karosseriegerippes wie in Figur 1 im Bereich des Übergangs zwischen Fahrgastbereich 9 und Kofferraum 10 dargestellt. Der Aufbau des Karosseriegerippes mit den Trägern, dem Fußboden, der Kofferaumklappe sowie den Blechbeklankungen entspricht dem in Figur 1. Allerdings weist die Seitenwandsäule 1 in diesem Fall lediglich ein Hohlprofilelement 2 auf, das sich von einem Säulenende zu dem gegenüberliegenden Ende erstreckt und das im mittleren Bereich eine größere Wandstärke aufweist. Die Erfindungsgemäße Tragsäule ermöglicht, die Säule mit einem in Form eines S-Schlags ausgeführten Rücksprung zu versehen, so dass an der Seitenwand eines Omnibusses eine einstückige Seitenwandsäule 1 angeordnet wird, ohne dass es zu Einbußen hinsichtlich der Sicherheit, des Komforts oder der Außenansicht kommt.

Zum Vergleich mit den in den Figuren 1 und 2 gezeigten Seitenwandsäulen sind in Figur 3 zwei Seitenwandsäulenvarianten eines Omnibusses dargestellt, wie sie aus dem Stand der Technik bekannt sind. Wesentliches Merkmal der Seitenwandsäulen in Figur 3a sowie 3b ist die zweiteilige Ausführung. So wird die Seitenwandsäule 1 in ein oberes und ein unteres Säulenbauelement unterteilt, um eine ebene Oberfläche aus der Blechbeplankung 5 und der Oberfläche der Kofferraumklappe 4 zu erhalten.

Die in Figur 3b dargestellte Tragsäule verfügt neben dem oberen- und dem unteren Säulenbauelement 1 a, 1 b über ein zusätzliches Verstärkungselement 3, dass an der Seitenwandsäule, bspw. im Fall eines Unfalls, angreifende Kräfte aufnehmen soll. Dieses zusätzliche Bauelement muss zum einen mit dem unteren Säulenbauelement 1b verbunden werden und zum anderen muss während der Herstellung eines Omnibus-Karosseriegerippes eine Schweißverbindung zwischen dem Verstärkungselement und dem oberen Säulenbauelement 1a hersgestellt werden. Die Herstellung einer derartigen Schweißnaht ist allerdings sehr aufwendig, da sich die Naht im Beanspruchungsfall im Bereich der höchsten Biegebeanspruchung befindet.

Die in den Figuren 3a bzw. 3b dargestellten, aus dem Stand der Technik bekannten Tragsäulen stellen somit hinsichtlich Sicherheit und Fertigungsaufwand nur unbefriedigenden technische Lösungen dar.

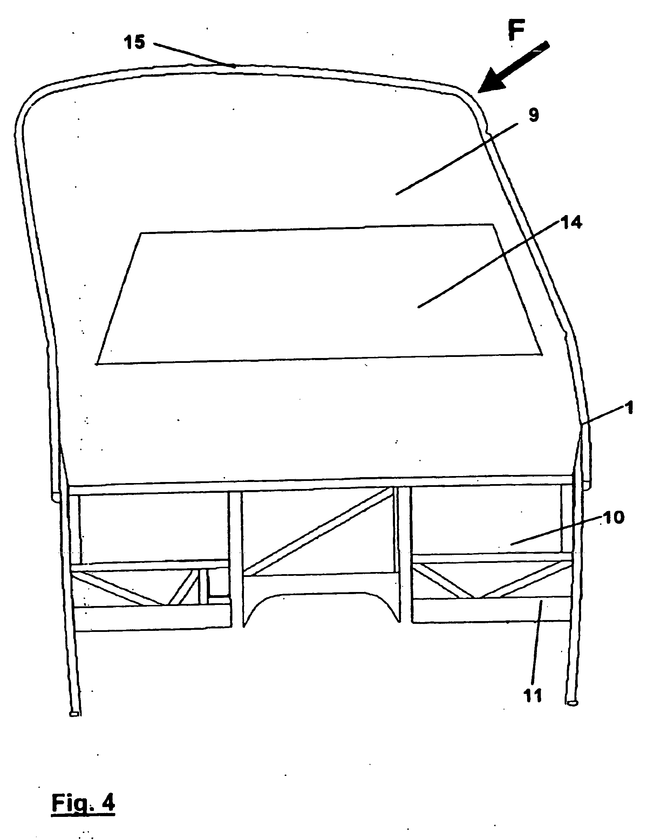

Figur 4 zeigt das Verhalten eines Ringspants eines Omnibus-Karosseriegerippes bei einem Belastungsfall, wie er etwa während des Umkippens eines Busses bei einem Unfall auftreten kann. Im unteren Bereich befindet sich der Kofferaum 10, der eine Vielzahl von Kofferraumstreben 11 zur Versteifung des Gerippes aufweist. Oberhalb des Kofferaums 10 befindet sich ein Querträger 7, auf dem später der Fußboden des Fahrgastbereiches befestigt wird. An beiden Seiten ist der Querträger 7 mit jeweils einer Seitenwandsäule 1 verbunden. Die Seitenwandsäulen 1 sind an den oberen Enden widerum über einen Dachträger 15 miteinander verbunden.

Darüber hinaus ist im Inneren des Fahrgastbereiches 9 der sogenannte Überlebensraum 14 dargestellt. Die Abmessungen des Überlebensraums 14 sind vom Gesetzgeber vorgeschrieben und sollen einen Raum festlegen, in den auch bei einem Unfall keine Gegenstände eindringen. Wird der in Figur 4 dargestellte Ringspant nun mit der Kraft F, bspw. durch Umkippen des Omnibusses, beaufschlagt, verschiebt sich der Ringspant in der gezeigten Weise. Entlang der Seitenwandsäulen 1 treten Biegespannungen auf, die ohne Vorsehen entsprechender Schutzmaßnahmen im Bereich des Befestigungspunktes des Querträgers 7 ihr Maximum haben, so dass im Belastungsfall die Seitenwandsäule 1 in diesem Bereich umgebogen und in den Überlebensraum 1 gelangen würde. Aus diesem Grund sind im Bereich der Befestigungspunkte des Querträgers 7 Verstärkungselemente 3 vorgesehen, die sicher stellen, dass im Belastungsfall das Maximum des Verhältnisses aus auftretendem Biegemoment und Widerstandsmoment gegen Biegung nach oben, also in Richtung zum Dachträger verschoben wird. Kommt es nun zum Umbiegen bzw. Umknicken der Seitenwandsäule wird die Säule oberhalb der Befestigungspunkte des Querträgers und gleichzeitig annähernd parallel zur seitlichen Begrenzung des Überlebensraums 14 umgeknickt.

Durch das Vorsehen einer einstückigen Seitenwandsäule, in der das Verstärkungselement 3, wie bereits eingehend erläutert, angeordnet wird, läßt sich daher auf besonders bevorzugte Weise eine Tragsäule 1 erzeugen, die sowohl gut zu fertigen bzw. montieren ist als auch alle Anforderungen an die Fahrgastsicherheit erfüllt.

### Bezugszeichenliste

- 1: Tragsäule
- 1a: oberes Säulenbauelement
- 1b: unteres Säulenbauelement
- 2: Hohlprofilelement
- 3: Vertstärkungselement
- 4: Kofferraumklappe
- 5: Blechbeplankung
- 6: Längsträger
- 7: Querträger
- 8: Fußboden
- 9: Fahrgastbereich
- 10: Kofferraum
- 11: Kofferraumstreben
- 12: Innenverkleidung
- 13: Lochschweißung
- 14: Überlebensraum
- 15: Dachträger

## Patentansprüche

1. Seitenwandsäule eines Omnibusses, die an gegenüberliegenden Enden mit jeweils wenigstens einem Karosserieelement verbindbar ist und die ein sich zwischen den beiden Enden erstreckendes Hohlprofilelement (2) aufweist, das einstückig ausgeführt ist und eine Längsmittenachse aufweist, die gekrümmt ist oder zumindest zwei nicht parallele Abschnitte aufweist, wobei sich an die gegenüberliegenden Enden äußere Säulenabschnitte anschließen, zwischen denen ein mittlerer Säulenabschnitt vorgesehen ist,
wobei die Längsmittenachse im Bereich des mittleren Säulenabschnitts, der die beiden äußeren Säulenabschnitte verbindet, gekrümmt ist oder zumindest zwei nicht parallele Abschnitte aufweist und der mittlere Säulenabschnitt in wenigstens einer Beanspruchungsrichtung über ein größeres Widerstandsmoment gegen Biegung als die äußeren Säulenabschnitte verfügt, wobei im Bereich des mittleren Säulenabschnitts wenigstens ein Verstärkungselement (3) vorgesehen ist, das zumindest abschnittsweise einen Kontaktbereich mit dem Hohlprofilelement (2) aufweist und das innerhalb des Hohlprofilelements (2) angeordnet ist, wobei das Hohlprofilelement (2) im Bereich des mittleren Säulenabschnitts einen S-Schlag oder zwei Knicke aufweist.

2. Seitenwandsäule nach Anspruch 1, **dadurch gekennzeichnet, dass** das Hohlprofilelement (2) einen wenigstens nahezu rechteckigen Querschnitt aufweist.

3. Seitenwandsäule nach Anspruch 1 oder 2, **dadurch gekennzeichnet, dass** das Hohlprofilelement (2) über eine Wandstärke von mindestens 2 mm verfügt.

4. Seitenwandsäule nach einem der Ansprüche 1 bis 3, **dadurch gekennzeichnet, dass** das Hohlprofilelement (2) zumindest teilweise einen hochfesten Stahl mit einer Mindeststreckgrenze von wenigstens 420 N/mm², vorzugsweise S 460, aufweist.

5. Seitenwandsäule nach einem der Ansprüche 1 bis 4, **dadurch gekennzeichnet dass**, das Hohlprofilelement (2) im Bereich des mittleren Säulenabschnittes wenigstens teilweise eine größere Wandstärke aufweist als im Bereich der äußeren Säulenabschnitte.

6. Seitenwandsäule nach einem der Ansprüche 1-5, **dadurch gekennzeichnet, dass** das Verstärkungselement (3) hohlprofilartig ausgebildet ist.

7. Seitenwandsäule nach einem der Ansprüche 1 bis 6, **dadurch gekennzeichnet, dass** das Verstärkungselement (3) einen zumindest nahezu rechteckigen Querschnitt aufweist.

8. Seitenwandsäule nach einem der Ansprüche 1 bis 7, **dadurch gekennzeichnet, dass** das Verstärkungselement (3) einen runden Querschnitt aufweist.

9. Seitenwandsäule nach Anspruch 1, **dadurch gekennzeichnet, dass** das Verstärkungselement (3) in Form eines T-, Doppel-T-, I-, U- oder L-Profils ausgebildet ist.

10. Seitenwandsäule nach einem der Ansprüche 1 bis 9, dadurch-gekennzeichnet, dass das Vertstärkungselement (3) zumindest teilweise einen hochfesten Stahl mit einer Mindeststreckgrenze von wenigstens 420 N/mm², vorzugsweise S 460, aufweist.

11. Seitenwandsäule nach einem der Ansprüche 1 bis 10, **dadurch gekennzeichnet, dass** das Verstärkungselement (3) mittels Schweiß- und/oder Nietverbindungen an dem Hohlprofilelement (2) befestigt ist.

12. Seitenwandsäule nach einem der Ansprüche 1 bis 11, **dadurch gekennzeichnet, dass** das Verstärkungselement (3) mittels wenigstens einer Lochschweißverbindung (13) mit dem Hohlprofilelement (2) verbunden ist.

## Claims

1. Side wall column of a bus that can be connected by opposite ends with at least one body element in each case and has a hollow profile element (2), which element (2) extends between the two ends, is of a one-piece design and has a longitudinal centre axis that is bent or at least has two non-parallel sections, with outer column sections being connected to the opposite ends and a central column section being provided between them,
wherein the longitudinal centre axis is bent in the area of the central column section that connects the two outer column sections or at least has two non-parallel sections and the central column section has a higher section modulus against bending in at least one stress direction than the outer column sections, with at least one reinforcement element (3) being provided in the area of the central column section, which element, at least in part, has an area of contact with the hollow profile element (2) and is arranged within the hollow profile element (2), wherein the hollow profile element (2) has an S deflection or two kinks in the area of the central column section.

2. Side wall column according to Claim 1, **characterised in that** the hollow profile element (2) has an at least almost rectangular cross-section.

3. Side wall column according to Claim 1 or 2, **characterised in that** the hollow profile element (2) has a wall thickness of at least 2 mm.

4. Side wall column according to one of Claims 1 to 3, **characterised in that** the hollow profile element (2) at least partially has a high-strength steel with a minimum yield strength of at least 420 N/mm², preferably S 460.

5. Side wall column according to one of Claims 1 to 4, **characterised in that** the hollow profile element (2) at least partially has a greater wall thickness in the area of the central column section than in the area of the outer column sections.

6. Side wall column according to one of Claims 1 to 5, **characterised in that** the reinforcement element (3) is designed as a hollow profile.

7. Side wall column according to one of Claims 1 to 6, **characterised in that** the reinforcement element (3) has an at least almost rectangular cross-section.

8. Side wall column according to one of Claims 1 to 7, **characterised in that** the reinforcement element (3) has a round cross-section.

9. Side wall column according to Claim 1, **characterised in that** the reinforcement element (3) is designed in the form of a T, double T, I, U or L profile.

10. Side wall column according to one of Claims 1 to 9, **characterised in that** the reinforcement element (3) at least partially has a high-strength steel with a minimum yield strength of at least 420 N/mm², preferably S 460.

11. Side wall column according to one of Claims 1 to 10, **characterised in that** the reinforcement element (3) is fastened to the hollow profile element (2) by means of welded and/or riveted joints.

12. Side wall column according to one of Claims 1 to 11, **characterised in that** the reinforcement element (3) is connected to the hollow profile element (2) by means of at least one plug-welded joint (13).

## Revendications

1. Montant de paroi latéral d'un bus, pouvant être relié au niveau des extrémités opposées à au moins un élément de carrosserie respectif et présentant un élément profilé creux (2) s'étendant entre les deux extrémités, qui est exécuté en une seule pièce et présente un axe central longitudinal, qui est courbé ou présente au moins deux sections non parallèles, dans lequel des sections de montant extérieures se relient au niveau des extrémités opposées, entre lesquelles sections est prévue une section de montant centrale,
dans lequel l'axe central longitudinal est courbé dans la zone de la section de montant centrale qui relie les deux sections de montant extérieures ou présente au moins deux sections non parallèles, et la section de montant centrale dispose, dans au moins un sens de sollicitation, d'un couple de résistance plus important contre la flexion que les sections de montant extérieures, dans lequel est prévu dans la zone de la section de montant centrale au moins un élément de renfort (3) présentant au moins par sections une zone de contact avec l'élément profilé creux (2) et disposé à l'intérieur de l'élément profilé creux (2), et dans lequel l'élément profilé creux (2) présente dans la zone de la section de montant centrale un profil d'impact en S ou deux courbures.

2. Montant de paroi latéral selon la revendication 1, **caractérisé en ce que** l'élément profilé creux (2) présente une section transversale au moins quasiment rectangulaire.

3. Montant de paroi latéral selon la revendication 1 ou 2, **caractérisé en ce que** l'élément profilé creux (2) dispose d'une épaisseur de paroi d'au moins 2 mm.

4. Montant de paroi latéral selon l'une des revendications 1 à 3, **caractérisé en ce que** l'élément profilé creux (2) présente au moins partiellement un acier très résistant avec une limite d'étirement minimale d'au moins 420 N/mm², de préférence l'acier S 460.

5. Montant de paroi latéral selon l'une des revendications 1 à 4, **caractérisé en ce que** l'élément profilé creux (2) présente dans la zone de la section de
montant centrale au moins partiellement une épaisseur de paroi plus importante que dans la zone des sections de montant extérieures.

6. Montant de paroi latéral selon l'une des revendications 1 à 5, **caractérisé en ce que** l'élément de renfort (3) est exécuté comme profilé creux.

7. Montant de paroi latéral selon l'une des revendications 1 à 6, **caractérisé en ce que** l'élément de renfort (3) présente une section transversale au moins quasiment rectangulaire.

8. Montant de paroi latéral selon l'une des revendications 1 à 7, **caractérisé en ce que** l'élément de renfort (3) présente une section transversale ronde.

9. Montant de paroi latéral selon la revendication 1, **caractérisé en ce que** l'élément de renfort (3) est exécuté en forme de profilé en T, en double T, en I, en U ou en L.

10. Montant de paroi latéral selon l'une des revendications 1 à 9, **caractérisé en ce que** l'élément de renfort (3) présente au moins partiellement un acier très résistant avec une limite d'étirement minimale d'au moins 420 N/mm², de préférence l'acier S 460.

11. Montant de paroi latéral selon l'une des revendications 1 à 10, **caractérisé en ce que** l'élément de renfort (3) est fixé au moyen de liaisons soudées et/ou rivetées sur l'élément profilé creux (2).

12. Montant de paroi latéral selon l'une des revendications 1 à 11, **caractérisé en ce que** l'élément de renfort (3) est relié à l'élément profilé creux (2) au moyen d'au moins une liaison à soudure par trou (13).
